# EUROPEAN PATENT APPLICATION

(11) **EP 3 643 940 A1**
(43) Date of publication of application: **29.04.2020**
(21) Application number: 18821540.4
(22) Date of filing: 10.05.2018
(51) Int. Cl.: F16D 13/62, F16D 55/36, F16D 69/00

(54) **WET FRICTION PLATE**

(30) Priority: 23.06.2017 JP 2017122781
(71) Applicant: Kabushiki Kaisha F.C.C., Hamamatsu-shi, Shizuoka 431-1394 (JP)
(72) Inventor: MIYAGAWA, Masatoshi, Hamamatsu-shi Shizuoka 431-1304 (JP); FUJIWARA, Hiromi, Hamamatsu-shi Shizuoka 431-1304 (JP); INOUE, Naofumi, Hamamatsu-shi Shizuoka 431-1304 (JP)
(74) Representative: Zimmermann, Tankred Klaus
(86) International application number: PCT/JP2018/018079
(87) International publication number: WO 2018/235443

(57) **Abstract**

Provided is a wet friction plate capable of further reducing drag torque. A wet friction plate 200 is configured to include an oil groove 203 and a friction material 210 on a flat plate annular core metal 201. The friction material 210 is formed with ride-on sides 214a, 214b and a ride-on groove 215. The ride-on sides 214a and 214b respectively extend linearly between an inner peripheral edge portion 211 formed on an inner side in a radial direction of the core metal 201 and two circumferential end portions 213a, 213b respectively extending in the radial direction at both end portions in a circumferential direction of the core metal 201. The ride-on groove 215 extends in a concave shape toward an outer side in the radial direction of the core metal 201 at a central portion of the inner peripheral edge portion 211 in the circumferential direction of the core metal 201. Further, the ride-on sides 214a and 214b are respectively formed to extend in a direction away from an imaginary oil groove center line L from the circumferential end portions 213a and 213b toward the inner peripheral edge portion 211.

## Description

### TECHNICAL FIELD

The present invention relates to a wet friction plate used in oil. Specifically, the present invention relates to the wet friction plate suitable for a multi-plate clutch device that is disposed between a prime mover and a driven body rotationally driven by the prime mover, and transmits or blocks a driving force of the prime mover to the driven body.

### BACKGROUND ART

Conventionally, vehicles such as a four-wheeled vehicle and a two-wheeled vehicle are equipped with the multi-plate clutch device in order to transmit or block a rotational driving force of the prime mover such as an engine to the driven body such as a wheel. In general, in the multi-plate clutch device, two plates arranged opposite to each other in lubricating oil, specifically, the wet friction plate having a friction material provided on a surface of a flat plate annular core metal, and a clutch plate having no friction material are pressed against each other to transmit or brake the rotational driving force.

Such a multi-plate clutch device is always required to reduce so-called drag torque for the purpose of improving fuel efficiency of the vehicle equipped with the multi-plate clutch device. The drag torque is caused by a difference between a wet friction plate rotation speed and a clutch plate rotation speed when the wet friction plate and the clutch plate are separated from each other. The drag torque is transmitted between the wet friction plate and the clutch plate by viscous resistance of the lubricating oil present between the two plates. The drag torque causes deterioration of fuel consumption of the vehicle.

Therefore, for example, in a clutch friction plate disclosed in PATENT LITERATURE 1 below, a plurality of small pieces of friction material is arranged through small grooves made up of gaps in a circumferential direction of the clutch friction plate as the wet friction plate. At the same time, a friction material group including the plurality of friction materials is arranged through fan-shaped grooves. Thus, the drag torque is reduced.

### CITATION LIST

### PATENT LITERATURE

PATENT LITERATURE 1: JP-A-2013-064508

However, the clutch friction plate described in PATENT LITERATURE 1 above, that is, the wet friction plate used in a so-called multi-plate clutch device including the lubricating oil interposed between the wet friction plate and the clutch plate is always required to reduce the drag torque generated between the wet friction plate and the clutch plate. This is not satisfied by the above related art.

The present invention addresses the above problems. An object of the present invention is to provide the wet friction plate that can further reduce the drag torque.

### SUMMARY OF THE INVENTION

In order to achieve the object described above, a feature of the present invention is a wet friction plate that includes an oil groove formed in a gap between friction materials by a plurality of friction materials arranged through the gap in a circumferential direction on a surface of a core metal formed in a flat plate annular shape. The friction material includes ride-on sides and a ride-on groove, the ride-on sides respectively extend linearly between both end portions of an inner peripheral edge portion extending in the circumferential direction of the core metal on an inner side in a radial direction of the core metal and both end portions of an outer peripheral edge portion extending in the circumferential direction of the core metal on an outer side in the radial direction of the core metal. The ride-on groove extends in a concave shape toward the outer side in the radial direction of the core metal at a central portion of the inner peripheral edge portion in the circumferential direction of the core metal, and when an imaginary oil groove center line connecting a center of the core metal and a center of width of the oil groove adjacent to the ride-on sides is assumed, the ride-on sides are formed to extend in a direction away from the imaginary oil groove center line from the both end portions of the outer peripheral edge portion toward the both end portions of the inner peripheral edge portion.

According to a feature of the present invention having such a configuration, in the wet friction plate, the ride-on sides facing the inner side of the core metal and its rotational direction are respectively formed at inner both end portions of the friction material. At the same time, the ride-on groove is formed radially outwardly at the central portion of the inner peripheral edge portion. Therefore, when the wet friction plate is driven to rotate, the lubricating oil present forward in the rotational direction rides on the friction material through the ride-on sides and the ride-on groove and actively circulates. This promotes separation between the clutch plate and the wet friction plate. Then, the drag torque can be reduced. In this case, the ride-on groove is a so-called stop groove that does not penetrate radially outwardly of the core metal. Therefore, the lubricating oil that has entered the ride-on groove can actively ride on the friction material.

Further, another feature of the present invention is the wet friction plate in which the ride-on sides are longer than a length from each of the ride-on sides to the ride-on groove of the inner peripheral edge portion adjacent to the ride-on sides.

According to another feature of the present invention having such a configuration, the wet friction plate is formed so that the ride-on sides are longer than the length between each of the ride-on sides and the ride-on groove of the inner peripheral edge portion adjacent to the ride-on sides. Therefore, when the wet friction plate is driven to rotate, more lubricating oil rides on the friction material. Then, the separation between the clutch plate and the wet friction plate is promoted. Thus, the drag torque can be reduced.

Further, another feature of the present invention is the wet friction plate in which the ride-on sides are formed to have an angle of 10° or more and 45° or less with respect to the imaginary oil groove center line.

According to another feature of the present invention having such a configuration, the wet friction plate is formed so that each of the ride-on sides has an angle of 10° or more and 45° or less with respect to the imaginary oil groove center line. Thus, according to experiments of the present inventors, the drag torque can be reduced more effectively than that of the wet friction plate according to a related art. Further, according to the experiments by the present inventors, each of the ride-on sides preferably has the angle of 14° more and 44° less, and more preferably 14° or more and 21° or less with respect to the imaginary oil groove center line. Thus, the drag torque can be reduced more effectively than that of the wet friction plate according to the related art.

Furthermore, another feature of the present invention is the wet friction plate in which the outer peripheral edge portion has a protruding outer corner portion formed at each of the both end portions thereof.
In this case, the protruding outer corner portion is a portion formed in a shape in which the comer portion of the friction material protrudes outwardly of the friction material without being so-called chamfered.

According to another feature of the present invention having such a configuration, the wet friction plate has the both end portions of the outer peripheral edge portion forming the protruding outer corner portion. Therefore, according to the experiments by the present inventors, the drag torque can be reduced more effectively than when the outer corner portion is chamfered.

Moreover, another feature of the present invention is the wet friction plate in which the friction material further comprises a notch groove extending in a concave shape toward an inner side in a radial direction of the core metal at the central portion of the outer peripheral edge portion in the circumferential direction of the core metal.

According to another feature of the present invention having such a configuration, the friction material of the wet friction plate includes the notch groove that is formed on an outer side in the radial direction of the core metal and extends in a concave shape toward the inner side in the radial direction of the core metal at the central portion of the outer peripheral edge portion in the circumferential direction of the core metal. Therefore, according to the experiments by the present inventors, the drag torque can be reduced more effectively than when the outer peripheral edge portion does not include the notch groove.

### BRIEF DESCRIPTION OF THE DRAWINGS

Fig. 1 is a cross-sectional view showing an overall configuration of a multi-plate clutch device including a wet friction plate according to an embodiment of the present invention.
Fig. 2 is a plan view showing an outline of appearance of the wet friction plate according to the embodiment of the present invention incorporated in the multi-plate clutch device shown in Fig. 1.
Fig. 3 is a partially enlarged view showing three friction materials arranged in a circumferential direction of a core metal in order to explain an external configuration of the friction material in the wet friction plate shown in Fig. 2.
Fig. 4 is a graph showing a comparison between a drag torque in the wet friction plate according to the present invention and the drag torque in a conventional wet friction plate in order to clarify a relationship between a shape of the friction material according to the present invention and the drag torque.
Fig. 5 is a graph showing the comparison between the drag torque in the wet friction plate according to the present invention and the drag torque in the conventional wet friction plate in order to clarify the relationship between the shape of the friction material according to the present invention and the drag torque.
Fig. 6 is a plan view showing the appearance of the wet friction plate according to a related art.
Fig. 7 is a partially enlarged view showing two friction materials arranged in the circumferential direction of the core metal in the wet friction plate according to a modification of the present invention.
Fig. 8 is a partially enlarged view showing the two friction materials arranged in the circumferential direction of the core metal in the wet friction plate according to another modification of the present invention.
Fig. 9 is a partially enlarged view showing the two friction materials arranged in the circumferential direction of the core metal in the wet friction plate according to another modification of the present invention.
Fig. 10 is a partially enlarged view showing the two friction materials arranged in the circumferential direction of the core metal in the wet friction plate according to another modification of the present invention.
Fig. 11 is a partially enlarged view showing the two friction materials arranged in the circumferential direction of the core metal in the wet friction plate according to another modification of the present invention.
Fig. 12 is a partially enlarged view showing the two friction materials arranged in the circumferential direction of the core metal in the wet friction plate according to another modification of the present invention.
Fig. 13 is a partially enlarged view showing the two friction materials arranged in the circumferential direction of the core metal in the wet friction plate according to another modification of the present invention.
Fig. 14 is a partially enlarged view showing the two friction materials arranged in the circumferential direction of the core metal in the wet friction plate according to another modification of the present invention.
Fig. 15 is a partially enlarged view showing the two friction materials arranged in the circumferential direction of the core metal in the wet friction plate according to another modification of the present invention.
Fig. 16 is a partially enlarged view showing the two friction materials arranged in the circumferential direction of the core metal in the wet friction plate according to another modification of the present invention.

### DESCRIPTION OF THE EMBODIMENTS

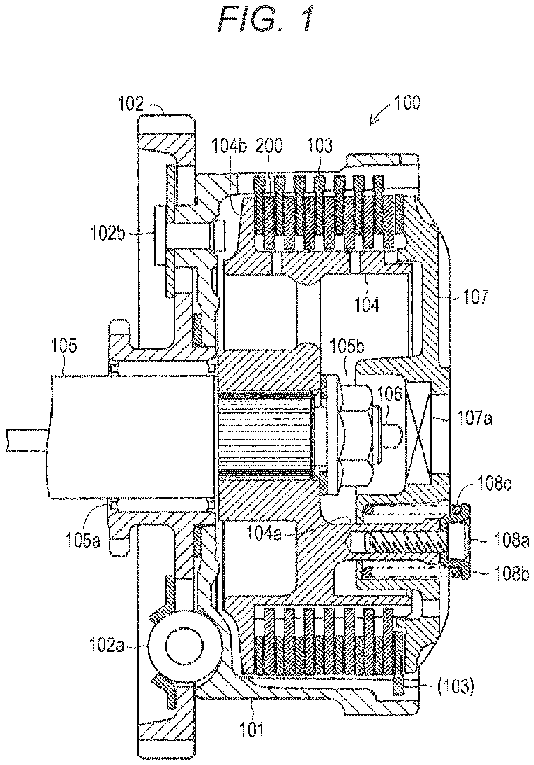

Hereinafter, an embodiment of a wet friction plate according to the present invention will be described with reference to the drawings. Fig. 1 is a cross-sectional view showing an outline of an overall configuration of a multi-plate clutch device 100 including a wet friction plate 200 according to the present invention. In the drawings referred to in the present specification, some of components are shown schematically, for example, exaggerated in order to facilitate understanding of the present invention. For this reason, dimension, ratio or the like between the components may differ. The multi-plate clutch device 100 is a mechanical device for transmitting or blocking a driving force of an engine (not shown) that is a prime mover in a two-wheeled vehicle (motorcycle) to a wheel (not shown) that is a driven body. The multi-plate clutch device 100 is disposed between the engine and a transmission (not shown).

### (Configuration of wet friction plate 200)

The multi-plate clutch device 100 includes a housing 101 made of aluminum alloy. The housing 101 is formed in a bottomed cylindrical shape. The housing 101 is a member that constitutes a part of the housing of the multi-plate clutch device 100. An input gear 102 is fixed to a left side surface (in the drawing) of the housing 101 by a rivet 102b through a torque damper 102a. The input gear 102 meshes with a drive gear (not shown) that is driven to rotate by driving of the engine, to be driven to rotate. On an inner peripheral surface of the housing 101, a plurality of (eight in the present embodiment) clutch plates 103 is held by spline fitting while being displaceable in an axial direction of the housing 101 and rotatable integrally with the housing 101.

The clutch plate 103 is a flat plate annular component pressed against the wet friction plate 200 described below. The clutch plate 103 is formed by annularly punching a thin plate material made of SPCC (cold-rolled steel plate) material. On both side surfaces (front and back surfaces) of the clutch plate 103, oil grooves (not shown) having a depth of several µm to several tens µm for holding lubricating oil described below are formed. Further, the both side surfaces (front and back surfaces) of the clutch plate 103 in which the oil grooves are formed is subjected to surface hardening treatment for the purpose of improving wear resistance. However, the surface hardening treatment is not directly related to the present invention. Therefore, a description thereof will be omitted.

A friction plate holder 104 formed in a substantially cylindrical shape is disposed concentrically with the housing 101 inside the housing 101. A large number of spline grooves are formed on an inner peripheral surface of the friction plate holder 104 in the axial direction of the friction plate holder 104. A shaft 105 is spline-fitted into the spline grooves. The shaft 105 is a shaft body formed in a hollow shape. One end portion (a right side in the drawing) of the shaft 105 supports the input gear 102 and the housing 101 via a needle bearing 105a in a rotatable manner. At the same time, the one end portion (the right side in the drawing) fixedly supports the spline-fitting friction plate holder 104 via a nut 105b. That is, the friction plate holder 104 rotates integrally with the shaft 105. On the other hand, the other end portion (left side in the drawing) of the shaft 105 is connected to the transmission (not shown) in the two-wheeled vehicle.

A shaft-like push rod 106 is disposed through a hollow portion of the shaft 105 so as to protrude from the one end portion (the right side in the drawing) of the shaft 105. The push rod 106 is connected to a clutch operation lever (not shown) of the two-wheeled vehicle on the opposite side (left side in the drawing) of an end portion thereof protruding from the one end portion (right side in the drawing) of the shaft 105. The push rod 106 slides in the hollow portion of the shaft 105 in the axial direction of the shaft 105 by operation of the clutch operation lever.

On an outer peripheral surface of the friction plate holder 104, a plurality of (seven in the present embodiment) wet friction plates 200 is held by spline fitting so as to sandwich the clutch plate 103 therebetween while being displaceable in the axial direction of the friction plate holder 104 and rotatable integrally with the friction plate holder 104.

On the other hand, the friction plate holder 104 is filled with a predetermined amount of lubricating oil (not shown). At the same time, three cylindrical support columns 104a are formed (only one is shown in the drawing). The lubricating oil is supplied between the wet friction plate 200 and the clutch plate 103, to absorb friction heat generated between the wet friction plate 200 and the clutch plate 103 and prevent wear of a friction material 210.

The three cylindrical support columns 104a are formed to protrude outwardly in the axial direction (right side in the drawing) of the friction plate holder 104. A pressing cover 107 disposed concentrically with the friction plate holder 104 is assembled to the cylindrical support columns 104a through bolts 108a, receiving plates 108b, and coil springs 108c. The pressing cover 107 is formed in a substantially disc shape and has an outer diameter substantially equal to that of the wet friction plate 200. Further, the pressing cover 107 is pressed toward the friction plate holder 104 by the coil spring 108c. Further, a release bearing 107a is provided at a position facing a right end portion in the drawing of the push rod 106 in an inner central portion of the pressing cover 107.

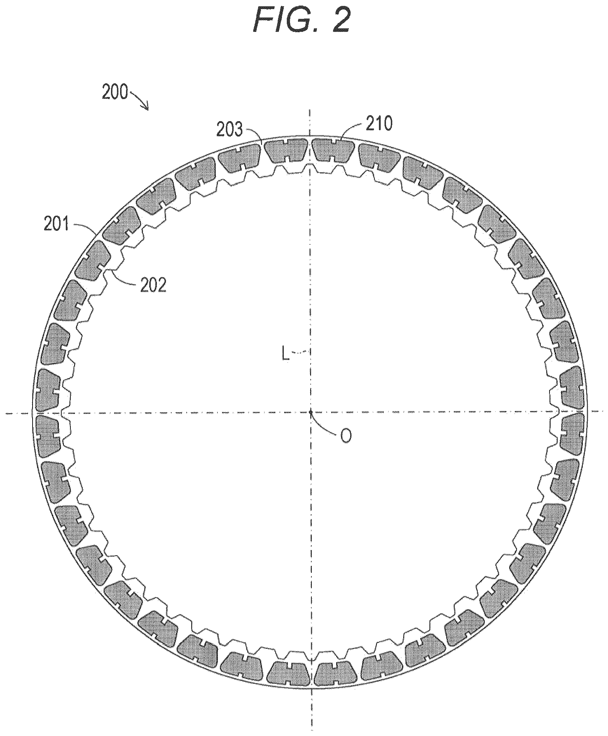

As shown in detail in Fig. 2, the wet friction plate 200 is configured to include oil grooves 203 and friction materials 210 on a flat plate annular core metal 201. The core metal 201 is a member that is a base portion of the wet friction plate 200. The core metal 201 is formed by substantially annularly punching a thin plate material made of SPCC (cold-rolled steel plate) material. In this case, an internal teeth-like spline 202 for spline-fitting with the friction plate holder 104 is formed in an inner peripheral portion of the core metal 201.

On a side surface of the wet friction plate 200 facing the clutch plate 103, that is, on the side surface of the core metal 201 facing the clutch plate 103, a plurality (32 pieces in the present embodiment) of small pieces of friction material 210 are provided in a circumferential direction of the core metal 201 through the oil grooves 203 formed of gaps. Note that, as shown in Fig. 2, dot hatching is applied to clearly show the friction materials 210.

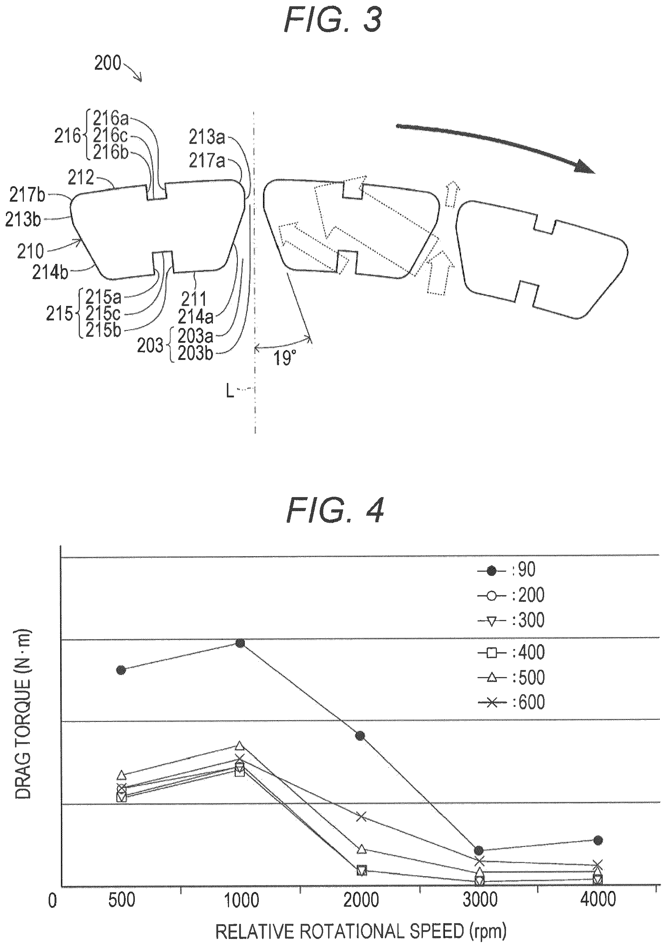

As shown in detail in Fig. 3, the oil groove 203 is a flow channel for guiding the lubricating oil between a radially inner side and a radially outer side of the wet friction plate 200. At the same time, the oil groove 203 is also an oil holding portion for allowing clutch oil to exist between the wet friction plate 220 and the clutch plate 103. The oil groove 203 includes an inner fan-shaped portion 203a, an orifice portion 203b, and an outer fan-shaped portion 203c. The inner fan-shaped portion 203a is formed in a fan shape having a groove width that gradually decreases from the radially inner side to the radially outer side of the core metal 201. The orifice portion 203b is a portion having a minimum groove width in the oil groove 203 and extends linearly in a radial direction of the core metal 201.

As shown in Fig. 3, the friction material 210 is a member for improving a frictional force against the clutch plate 103. The friction material 210 is made of a paper material formed in a small piece extending to curve in the circumferential direction of the core metal 201. More specifically, the friction material 210 is configured to include one inner peripheral edge portion 211, one outer peripheral edge portion 212, two circumferential end portions 213a and 213b, two ride-on sides 214a and 214b, one ride-on groove 215, one notch groove 216 and two outer corner portions 217a and 217b.

The inner peripheral edge portion 211 is a portion forming a radially inner edge portion of the core metal 201 in the friction material 210. The inner peripheral edge portion 211 is formed to extend in an arc shape along an inner edge portion of an annular portion of the core metal 201. The outer peripheral edge portion 212 is a portion forming a radially outer edge portion of the core metal 201 in the friction material 210. The outer peripheral edge portion 212 is formed to extend in an arc shape along an outer edge portion of the annular portion of the core metal 201. The friction material 210 is formed such that a radial length of the core metal 201 in the friction material 210 that is a distance between the inner peripheral edge portion 211 and the outer peripheral edge portion 212 is shorter than a width of the annular portion of the core metal 201.

The two circumferential end portions 213a and 213b are portions respectively forming edge portions at both ends of the friction material 210 in the circumferential direction of the core metal 201. The circumferential end portions 213a and 213b are formed to extend linearly in the radial direction of the core metal 201. In this case, in the circumferential direction of the core metal 201, between the two friction materials 210 adjacent to each other through the oil groove 203, the circumferential end portion 213a and the circumferential end portion 213b are opposed to each other through the oil groove 203. Then, the circumferential end portion 213a and the circumferential end portion 213b are formed to be parallel to each other. Thus, between the two friction materials 210 facing each other, the orifice portion 203b having a minimum groove width in the oil groove 203 and extending linearly in the radial direction of the core metal 201 is formed by the circumferential end portions 213a and 213b.

The two ride-on sides 214a and 214b are respectively formed between the inner peripheral edge portion 211 and the circumferential end portions 213a, 213b. The ride-on sides 214a and 214b are portions for guiding the lubricating oil to ride on an upper surface of the friction material 210. The ride-on sides 214a and 214b are respectively formed to extend linearly between the inner peripheral edge portion 211 and the circumferential end portions 213a, 213b. In this case, the ride-on sides 214a and 214b are respectively formed to extend from the circumferential end portions 213a and 213b toward the inner peripheral edge portion 211 in a direction away from an imaginary oil groove center line L.

Here, the imaginary oil groove center line L is an imaginary straight line connecting a center O of the core metal 201 and a width center of the oil groove 203 adjacent to the ride-on sides 214a and 214b. In this case, the width center of the oil groove 203 is a central portion of the groove width that is a width of the oil groove 203 in the circumferential direction of the core metal 201. That is, the width center of the oil groove 203 is a middle point between the circumferential end portion 213a and the circumferential end portion 213b formed on both sides of the oil groove 203 in the circumferential direction of the core metal 201.

That is, the ride-on sides 214a and 214b are formed in a straight line shape facing forward in a rotational direction of the core metal 201 and radially inwardly. In the present embodiment, the ride-on sides 214a and 214b are formed in a straight line having an inclination angle of 19° with respect to the imaginary oil groove center line L. Thus, the inner fan-shaped portion 203a having the groove width gradually increasing toward the inner side is formed on the inner side in the radial direction of the core metal 201 in the oil groove 203. Note that the straight line shape of the ride-on sides 214a and 214b means a substantially straight line shape including a slightly curved curve.

The ride-on sides 214a and 214b are formed to be longer than lengths from the ride-on sides 214a and 214b to the ride-on groove 215 on the inner peripheral edge portion 211 adjacent to the ride-on sides 214a and 214b. More specifically, the ride-on sides 214a and 214b are formed to be longer than a length from a connection point between the inner peripheral edge portion 211 and the ride-on side 214a (or the ride-on side 214b) to a connection point between the inner peripheral edge portion 211 and a depth side 215a (or a depth side 215b) of the ride-on groove 215 (hereinafter referred to as "half the length of the inner peripheral edge portion 211").

The ride-on groove 215 is formed in a central portion of the inner peripheral edge portion 211 in the circumferential direction of the core metal 201. The ride-on groove 215 is a portion for guiding the lubricating oil to ride on the upper surface of the friction material 210. The ride-on groove 215 is formed in a groove shape that is recessed radially outwardly of the core metal 201. The ride-on groove 215 is formed to have a groove width less than or equal to half the length of the inner peripheral edge portion 211 in the circumferential direction of the core metal 201 and greater than or equal to the groove width of the oil groove 203, and a depth less than or equal to one half of a radial width that is the radial length of the core metal 201 of the friction material 210. In the present embodiment, the ride-on groove 215 is formed to have the same groove width as the oil groove 203 and a depth of one fourth of the radial width of the friction material 210, and in a rectangular shape in plan view.

The ride-on groove 215 includes two depth sides 215a, 215b and one circumferential side 215c. The depth sides 215a and 215b are separated by the same interval as the groove width of the oil groove 203 described above. The depth sides 215a and 215b are formed to extend in parallel to each other in the radial direction of the core metal 201. In this case, the depth side 215a functions as a portion for guiding the lubricating oil to ride on the upper surface of the friction material 210 when the wet friction plate 200 is rotationally driven to the right in the drawing. Further, the depth side 215b functions as a portion for guiding the lubricating oil to ride on the upper surface of the friction material 210 when the wet friction plate 200 is rotationally driven to the left in the drawing.

The circumferential side 215c is a portion for obstructing flow of the lubricating oil that has entered the ride-on groove 215 and making it easier to ride on the depth side 215a or the depth side 215b. The circumferential side 215c is formed to extend linearly in the circumferential direction of the core metal 201 at the innermost portion of the ride-on groove 215.

The notch groove 216 is formed in the central portion of the outer peripheral edge portion 212 in the circumferential direction of the core metal 201. The notch groove 216 is a portion for quickly discharging the lubricating oil, that rides on the upper surface of the friction material 210 and flows radially outwardly, to an outside of the friction material 210. The notch groove 216 is formed in a groove shape that is recessed inward in the radial direction of the core metal 201. The notch groove 216 is formed to have a groove width less than or equal to half the length of the outer peripheral edge portion 212 in the circumferential direction of the core metal 201 and greater than or equal to the groove width of the oil groove 203, and a depth less than or equal to one half of the radial width that is the radial length of the core metal 201 of the friction material 210. In the present embodiment, the ride-on groove 215 is formed to have the same groove width as the oil groove 203 and a depth of one fourth of the radial width of the friction material 210, and in a rectangular shape in plan view.

The notch groove 216 includes depth sides 216a, 216b and one circumferential side 216c. The depth sides 216a and 216b are separated by the same interval as the groove width of the oil groove 203 described above. The depth sides 216a and 216b are formed to extend in parallel to each other in the radial direction of the core metal 201.

In this case, the depth side 216a functions as a portion for quickly discharging the lubricating oil flowing on the upper surface of the friction material 210 when the wet friction plate 200 is rotationally driven to the left in the drawing. Further, a corner portion between the depth side 216a and the outer peripheral edge portion 212 functions as a portion for guiding the lubricating oil or bubbles existing outside the friction material 210 into the notch groove 216, to generate a spiral flow.

The depth side 216a functions as a portion for quickly discharging the lubricating oil flowing on the upper surface of the friction material 210 when the wet friction plate 200 is rotationally driven to the right in the drawing. Further, a corner portion between the depth side 216b and the outer peripheral edge portion 212 functions as the portion for guiding the lubricating oil or bubbles existing outside the friction material 210 into the notch groove 216, to generate a spiral flow.

The circumferential side 216c is a portion for making the flow of the lubricating oil or bubbles that has entered the notch groove 216 spiral. The circumferential side 216c is formed to extend linearly in the circumferential direction of the core metal 201 at the innermost portion of the notch groove 216.

The two outer corner portions 217a and 217b are protruding corner portions. In the corner portions, the outer peripheral edge portion 212 extending in the circumferential direction of the core metal 201 on the radially outer side of the core metal 201, and the circumferential end portions 213a, 213b extending in the radial direction of the core metal 201 are directly connected to each other. In this case, the outer corner portions 217a and 217b are formed in a shape protruding outwardly of the friction material 210. However, strictly speaking, the outer comer portions 217a and 217b are formed in a shape having a rounded arc-shaped tip portion, that is, a so-called corner rounded shape. In the present embodiment, the outer corner portions 217a and 217b are formed in an arc having a radius of 1 mm.

In the friction material 210, connection portions between the inner peripheral edge portion 211 and the ride-on sides 214a, 214b and connection portions between the circumferential end portions 213a, 213b and the ride-on sides 214a, 214b are also formed in a corner rounded shape in the same manner as the outer comer portions 217a and 217b.

The friction materials 210 formed in this way are arranged side by side in the circumferential direction of the core metal 201 on the annular portion of the core metal 201 through the oil groove 203. In the present embodiment, 32 pieces of friction material 210 are arranged side by side at equal intervals in the circumferential direction of the core metal 201. In this case, the friction materials 210 are bonded on the core metal 201 with an adhesive. Note that the friction material 210 should just be made of a raw material that can improve the frictional force between the wet friction plate 200 and the clutch plate 103. That is, the friction material 210 may also be made of a material other than paper, such as a cork material, a rubber material, or a glass material.

### (Operation of wet friction plate 200)

Next, operation of the wet friction plate 200 configured as described above will be described. As described above, the wet friction plate 200 is assembled and used in the multi-plate clutch device 100. As described above, the multi-plate clutch device 100 is disposed between the engine and the transmission in the vehicle, and transmits or blocks the driving force of the engine to the transmission by the operation of the clutch operation lever by a vehicle operator.

That is, a vehicle operator (not shown) operates the clutch operation lever (not shown) to move the push rod 106 backward (displace to the left in the drawing). In this case, a tip portion of the push rod 106 is not pressing the release bearing 107a. Then, the pressing cover 107 presses the clutch plate 103 by an elastic force of the coil spring 108c. Thus, the clutch plate 103 and the wet friction plate 200 are in a state where they are pressed against each other and frictionally connected while being displaced toward a receiving portion 104b formed in a flange shape on the outer peripheral surface of the friction plate holder 104. As a result, the driving force of the engine transmitted to the input gear 102 is transmitted to the transmission through the clutch plate 103, the wet friction plate 200, the friction plate holder 104, and the shaft 105.

On the other hand, the vehicle operator operates the clutch operation lever (not shown) to move the push rod 106 forward (displace to the right side in the drawing). In this case, the tip portion of the push rod 106 is pressing the release bearing 107a. Then, the pressing cover 107 is displaced to the right in the drawing while resisting the elastic force of the coil spring 108c. In this way, the pressing cover 107 and the clutch plate 103 are separated from each other. Thus, the clutch plate 103 and the wet friction plate 200 are released from a state of being pressed and connected to each other while being displaced toward the pressing cover 107, and are separated from each other. Accordingly, the driving force from the clutch plate 103 is not transmitted to the wet friction plate 200. As a result, transmission of the driving force of the engine transmitted to the input gear 102 to the transmission is interrupted.

In a state where the clutch plate 103 and the wet friction plate 200 are separated from each other, direct frictional contact between the clutch plate 103 and the wet friction plate 200 is eliminated. On the other hand, both of them are indirectly connected by the lubricating oil present between the clutch plate 103 and the wet friction plate 200. More specifically, the lubricating oil in contact with the friction material 210 of the wet friction plate 200 is mainly dragged to the friction material 210 by viscous resistance. Therefore, the clutch plate 103 in contact with the dragged lubricating oil is dragged by the viscous resistance of the lubricating oil, to reduce its rotation speed.

In this case, the ride-on side 214a (or the ride-on side 214b) and the depth side 215a (or the depth side 215b) of the ride-on groove 215 are formed facing a direction opposite to a rotational direction (solid arrow in Fig 3) of the wet friction plate 200 in the inner peripheral edge portion 211 of the friction material 210. Therefore, some of the lubricating oil colliding with the ride-on side 214a (or the ride-on side 214b) and the depth side 215a (or the depth side 215b) rides on the friction material 210, and flows on the friction material 210 rearwardly of the rotation direction and radially outwardly (see broken line arrows in Fig. 3). This promotes separation between the clutch plate 103 and the wet friction plate 200. Then, an indirect frictional contact state through the lubricating oil is alleviated. It is considered that a transmitted torque, that is, a drag torque is reduced in this way.

Then, the lubricating oil riding on the friction material 210 reaches the outer peripheral edge portion 212 side on the friction material 210. In this case, the depth side 216b (or the depth side 216a) of the notch groove 216 is formed inward of the friction material 210 at the central portion of the outer peripheral edge portion 212 in the friction material 210. Therefore, the lubricating oil riding on the friction material 210 is easily discharged. Thus, in the friction material 210, it is considered that the lubricating oil is urged to ride on mainly from the ride-on side 214a (or the ride-on side 214b) side.

On the other hand, as the wet friction plate 200 rotates, the lubricating oil is supplied to the oil groove 203 from the radially inner side. In this case, the oil groove 203 is formed so that the inner fan-shaped portion 203a reduces the groove width from the radially inner side to the radially outer side. Therefore, it is possible to collect more lubricating oil supplied from the radially inner side of the core metal 201. At the same time, it is possible to store some of the lubricating oil collected by the orifice portion 203b in the inner fan-shaped portion 203a and guide it to the ride-on side 214a (or the ride-on side 214b). Further, the oil groove 203 guides another portion of the lubricating oil collected by the orifice portion 203b radially outwardly of the core metal 201 through the orifice portion 203b (see the broken line arrows in Fig. 3).

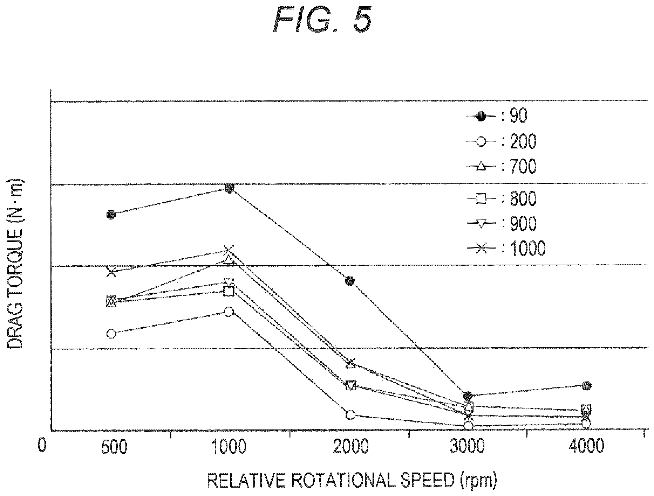

Here, experimental results by the present inventors will be described. Figs. 4 and 5 are graphs showing a magnitude of the drag torque in the multi-plate clutch device (not shown) using a wet friction plate 90 according to a related art, and magnitudes of the drag torque in the multi-plate clutch device 100 using the wet friction plates 200 to 1000 according to the present invention. In Figs. 4 and 5, a torque value itself on a vertical axis is not necessary to prove superiority of the present invention. Therefore, the torque value is omitted. Further, in order to facilitate understanding of the experimental results of nine wet friction plates 200 to 1000, the experimental results are divided into two graphs shown in Figs. 4 and 5. Figs. 4 and 5 have exactly the same vertical and horizontal axes.

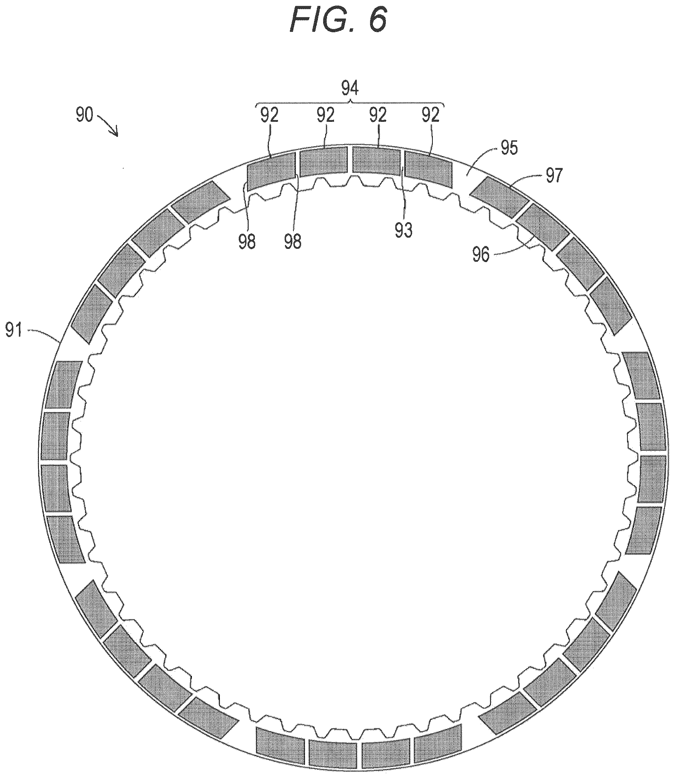

As shown in Fig. 6, the wet friction plate 90 according to the related art used in this experiment is configured such that a friction material group 94 is arranged in the circumferential direction of a core metal 91 through a fan-shaped groove 95. Further, in the friction material group 94, four small pieces of friction material 92 are arranged in the circumferential direction of the core metal 91 through small oil grooves 93. Here, the fan-shaped groove 95 extends wider than the small oil groove 93. In this case, in each friction material 92, an inner peripheral edge portion 96 extending inside in the radial direction of the core metal 91 and an outer peripheral edge portion 97 extending outside in the radial direction are formed in an arc shape. Then, circumferential end portions 98 extending between both end portions of the inner peripheral edge portion 96 and both end portions of the outer peripheral edge portion 97 are formed parallel to each other in the same friction material group 94.

That is, the friction materials 92 are not formed with portions corresponding to the ride-on sides 214a, 214b, the ride-on groove 215, and the notch groove 216 according to the present invention. Further, the multi-plate clutch device according to the related art has the same configuration as the multi-plate clutch device 100 according to the present invention except for the wet friction plate 200. Note that Fig. 6 shows dot hatching applied to clearly show the friction material 92.

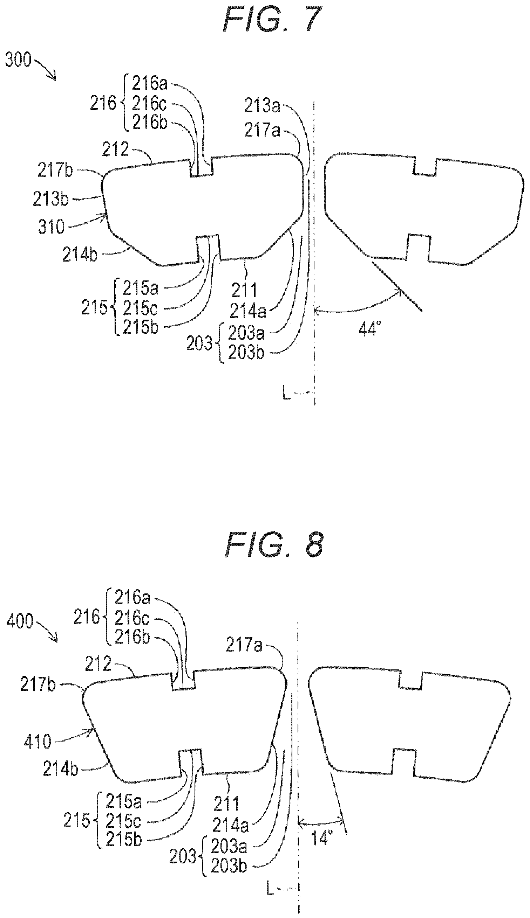

In a wet friction plate 300 according to a modification of the present invention, as shown in Fig. 7, the friction material 310 is different from the friction material 210 in that the inclination angle of the ride-on sides 214a, 214b is 44° with respect to the imaginary oil groove center line L.

In a wet friction plate 400 according to the modification of the present invention, as shown in Fig. 8, the friction material 410 is different from the friction material 210 in that the inclination angle of the ride-on sides 214a, 214b is 14° with respect to the imaginary oil groove center line L, and the circumferential end portions 213a, 213b are omitted, and thus the ride-on sides 214a and 214b are respectively directly connected to both end portions of the outer peripheral edge portion 212 via the outer corner portions 217a and 217b.

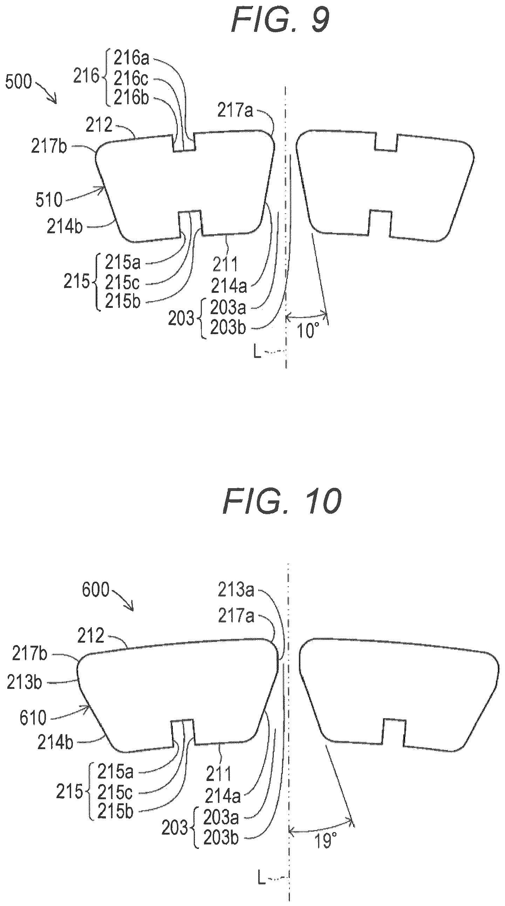

In a wet friction plate 500 according to the modification of the present invention, as shown in Fig. 9, the friction material 510 is different from the friction material 210 in that the inclination angle of the ride-on sides 214a, 214b is 10° with respect to the imaginary oil groove center line L, and the circumferential end portions 213a, 213b are omitted, and thus the ride-on sides 214a and 214b are respectively directly connected to both end portions of the outer peripheral edge portion 212 via the outer comer portions 217a and 217b.

In a wet friction plate 600 according to the modification of the present invention, as shown in Fig. 10, the friction material 610 is different from the friction material 210 in that the notch groove 216 is omitted on the outer peripheral edge portion 212.

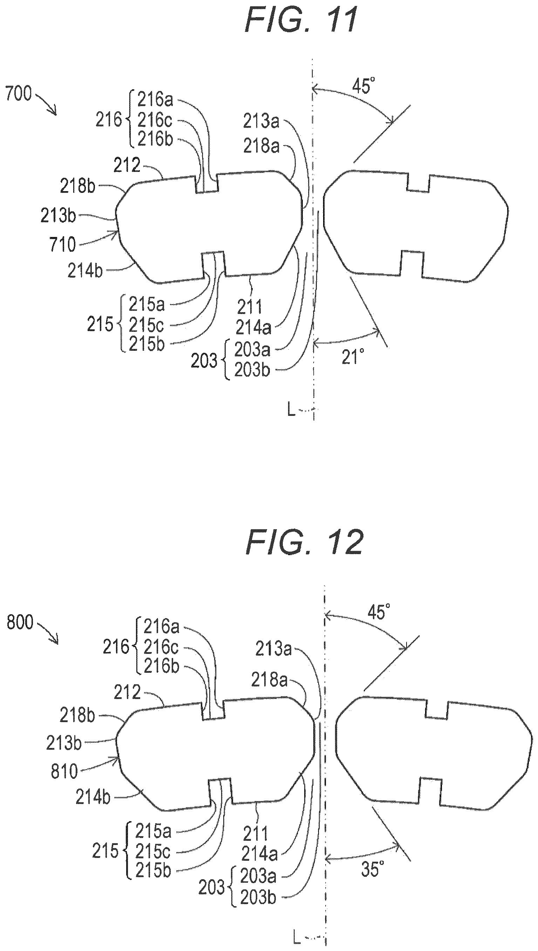

In a wet friction plate 700 according to another modification of the present invention, as shown in Fig. 11, the friction material 710 is different from the friction material 210 in that get-off sides 218a and 218b are formed instead of the outer corner portions 217a and 217b, the inclination angle of the ride-on sides 214a and 214b is 21° with respect to the imaginary oil groove center line L, and the ride-on sides 214a and 214b is formed to have a length less than or equal to half the length of the inner peripheral edge portion 211.

Here, the get-off sides 218a and 218b are so-called chamfers formed to extend linearly between the outer peripheral edge portion 212 and the circumferential end portions 213a, 213b. In this case, the get-off sides 218a and 218b are formed to extend in the direction away from the imaginary oil groove center line L from the circumferential end portions 213a and 213b toward the outer peripheral edge portion 212.

In the present embodiment, the get-off sides 218a and 218b are formed in a straight line having an inclination angle of 45° with respect to the imaginary oil groove center line L. Thus, an outer fan-shaped portion 203c is formed in a fan shape having a groove width that gradually increases from the radially inner side to the radially outer side of the core metal 201 on the outer side in the radial direction of the core metal 201 in the oil groove 203. Further, the get-off sides 218a and 218b are formed to have a length shorter than that of the circumferential end portions 213a and 213b and that of the ride-on sides 214a and 214b.

In the wet friction plate 800 according to another modification of the present invention, as shown in Fig. 12, the friction material 810 is different from the friction material 710 in that the inclination angle of the ride-on sides 214a and 214b is 35° with respect to the imaginary oil groove center line L, and the ride-on sides 214a and 214b are formed to have substantially the same length (range of ± 1 mm) as half the length of the inner peripheral edge portion 211.

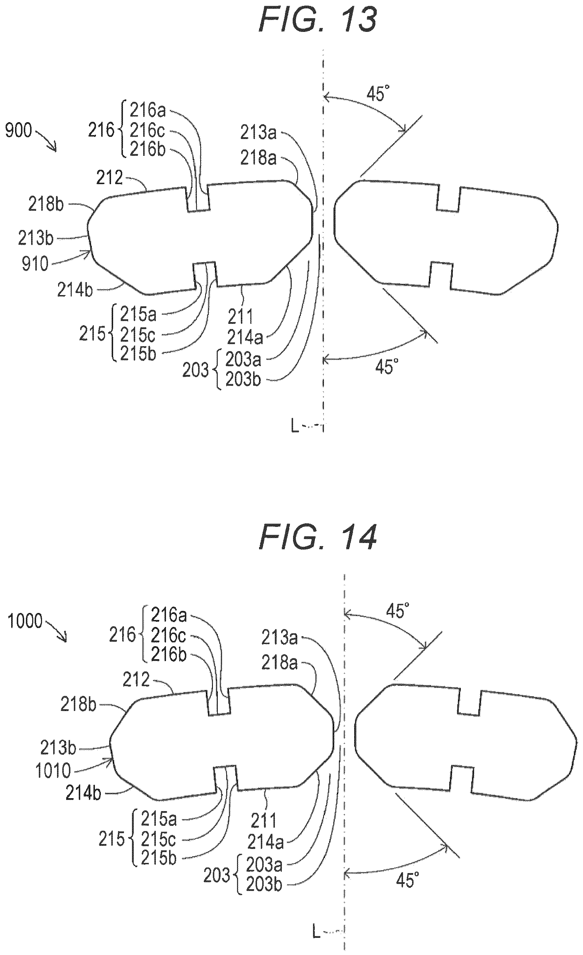

In the wet friction plate 900 according to another modification of the present invention, as shown in Fig. 13, the friction material 910 is different from the friction material 710 in that the inclination angle of the ride-on sides 214a and 214b is 45° with respect to the imaginary oil groove center line L, and the ride-on sides 214a and 214b are formed to have substantially the same length (range of ± 1 mm) as half the length of the inner peripheral edge portion 211. In this case, substantially the same length means that differences between the length of the ride-on sides 214a, 214b and half the length of the inner peripheral edge portion 211 are 10% or less.

Further, in the wet friction plate 1000 according to the modification of the present invention, as shown in Fig. 14, the friction material 1010 is different from the friction material 910 in that the get-off sides 218a and 218b are formed large, and the ride-on sides 214a and 214b are formed to have a length shorter than half the length of the inner peripheral edge portion 211. Note that a total area of the friction materials 310 to 1010 respectively in the wet friction plate 300 to 1000 is set to be the same as that of the friction materials 210 in the wet friction plate 200.

As is apparent from the experimental results shown in Fig. 4, the multi-plate clutch device 100 using the wet friction plates 200 to 1000 according to the present invention can reduce the drag torque when a relative rotation speed is in a range of 500 rpm to 4000 rpm. Here, the relative rotation speed is a difference in relative rotation speed between the clutch plate 103 and the wet friction plates 200 to 1000.

Specifically, when the relative rotation speed is 500 rpm, the drag torque is reduced by at least about 30% (wet friction plate 1000). At the same time, the drag torque is reduced by about 60% at maximum (wet friction plates 300, 400). Further, when the relative rotation speed is 1000 rpm, the drag torque is reduced by at least about 25% (wet friction plate 1000). At the same time, the drag torque is reduced by about 50% at maximum (wet friction plates 400, 200, 300). Furthermore, when the relative rotation speed is 2000 rpm, the drag torque is reduced by at least about 50% (wet friction plate 600). At the same time, the drag torque is reduced by about 90% at maximum (wet friction plates 400, 200).

Further, when the relative rotation speed is 3000 rpm, the drag torque is reduced by at least about 30% (wet friction plates 600, 700). At the same time, the drag torque is reduced by about 90% at maximum (wet friction plates 200, 300, 400). Further, when the relative rotation speed is 4000 rpm, the drag torque is reduced by at least about 60% (wet friction plates 600, 700, 800). At the same time, the drag torque is reduced by about 90% at maximum (wet friction plates 300, 200, 400).

As can be understood from the above description of the operation, according to the above embodiment, in the wet friction plate 200, the ride-on sides 214a and 214b facing the inner side of the core metal and the rotation direction are respectively formed at inner both end portions of the friction material 210. At the same time, the ride-on groove 215 is formed toward the outer side in the radial direction at the central portion of the inner peripheral edge portion 211. Therefore, when the wet friction plate 200 is driven to rotate, the lubricating oil present forward in the rotation direction rides on the friction material 210 through the ride-on sides 214a, 214b and the ride-on groove 215 and actively circulates. This promotes the separation between the clutch plate 103 and the wet friction plate 200. Thus, the drag torque can be reduced. In this case, the ride-on groove 215 is a so-called stop groove that does not penetrate radially outwardly of the core metal 201. Therefore, the lubricating oil that has entered the ride-on groove 215 can actively ride on the friction material 210. Note that the drag torque can also be reduced in the wet friction plates 300 to 1000.

Further, implementation of the present invention is not limited to the above embodiment. Various modifications can be made without departing from the object of the present invention. Note that, in the modifications shown below, the components the same as that of the wet friction plate 200 in the embodiment are denoted by reference numerals corresponding to the reference numerals attached to the wet friction plate 200. Description of the components will be omitted.

For example, in the above embodiment, the wet friction plates 200 to 600 are formed so that the ride-on sides 214a and 214b have a length longer than half the length of the inner peripheral edge portion 211. Thus, according to the experimental results shown in Figs. 4 and 5, it can be confirmed that the wet friction plates 200 to 600 tend to reduce the drag torque as compared to when the ride-on sides 214a and 214b are formed to have a length less than or equal to half the length of the inner peripheral edge portion 211 (wet friction plates 700 to 1000). However, as a matter of course, the ride-on sides 214a and 214b may be formed to have a length less than or equal to half the length of the inner peripheral edge portion 211 like the wet friction plates 700 to 1000.

In the above embodiment, in the wet friction plate 200, the ride-on sides 214a and 214b are formed in a straight line inclined by 19° with respect to the imaginary oil groove center line L. However, according to the experimental results shown in Figs. 4 and 5, the ride-on sides 214a and 214b are formed to have an angle of 10° or more and 45° or less with respect to the imaginary oil groove center line L. Thus, it is confirmed that the drag torque tends to be reduced more effectively than the wet friction plate 90 according to the prior art. Further, according to the experiments by the present inventors, since the ride-on sides 214a and 214b are formed to have an angle of 14° or more and 44° or less, more preferably 14° or more and 21° or less with respect to the imaginary oil groove center line L, it is possible to reduce the drag torque more effectively than the wet friction plate 90 according to the prior art.

In the above embodiment, the ride-on sides 214a and 214b are respectively formed between the inner peripheral edge portion 211 and the circumferential ends 213a, 213b. At the same time, the ride-on sides 214a and 214b are respectively formed to extend in the direction away from the imaginary oil groove center line L from the circumferential end portions 213a and 213b toward the inner peripheral edge portion 211. However, the ride-on sides 214a and 214b may be respectively formed, as in the wet friction plates 400 and 500, to extend linearly between both end portions of the inner peripheral edge portion 211 and both end portions of the outer peripheral edge portion 212, and to extend in the direction away from the imaginary oil groove center line L from the both end portions of the outer peripheral edge portion 212 toward the both end portions of the inner peripheral edge portion 211.

In this case, according to the experimental results of the wet friction plate 200 and the wet friction plate 400 shown in Fig. 4, the drag torque in a low rotation range of 1000 rpm or less can be reduced by omitting the circumferential end portions 213a and 213b and by forming the ride-on sides 214a and 214b between the both end portions of the inner peripheral edge portion 211 and the both end portions of the outer peripheral edge portion 212.

In the above embodiment, the wet friction plates 200 to 600 are configured such that the outer corner portions 217a and 217b are formed. Thus, according to the experimental results shown in Figs. 4 and 5, it can be confirmed that the wet friction plates 200 to 600 tend to reduce the drag torque as compared to when the get-off sides 218a and 218b are formed instead of the outer corner portions 217a and 217b (wet friction plates 700 to 1000). However, as a matter of course, the get-off sides 218a and 218b may be formed instead of the outer corner portions 217a and 217b like the wet friction plates 700 to 1000.

In the above embodiment, the wet friction plates 200 to 500 and 700 to 1000 are configured to have the notch groove 216 provided at a circumferential central portion of the outer peripheral edge portion 212. In this case, according to the experimental results shown in Fig. 4, it can be confirmed that the wet friction plate 200 can reduce the drag torque compared with the wet friction plate 600 in which the notch groove 216 is omitted. This is thought to be because the lubricating oil that rides on the friction material 210 from the ride-on sides 214a and 214b and flows toward the outer peripheral edge portion 212 can be quickly discharged out of the friction material 210, and some of the lubricating oil or bubbles existing outside the outer peripheral edge portion 212 of the friction material 210 is guided into the notch groove 216, and causes a turbulent flow together with the lubricating oil that has ridden on and flowed on the friction materials 210 and 310, so that it is possible to suppress generation of an oil film that causes an increase in drag torque.

However, the wet friction plate 600 in which the notch groove 216 is not formed is also recognized to have an effect of reducing drag torque as compared to the related art. Therefore, the wet friction plate 600 in which the notch groove 216 is not formed is not excluded from the present invention. Note that, as for the shape of the notch portion 216, the circumferential side 216c may be formed in an arc shape. Or, by omitting the circumferential side 216c, the depth side 216a and the depth side 216b may be formed to approach each other as they go outwardly in the radial direction of the core metal 201, to have a triangular shape in plan view.

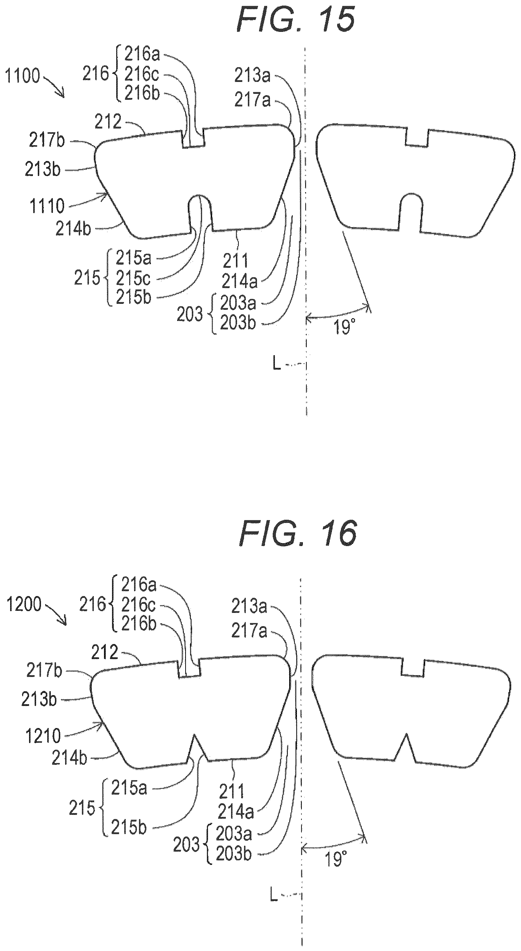

In the above embodiment, in the wet friction plates 200 to 1000, the ride-on groove 215 is formed to have a rectangular shape in plan view. However, the ride-on groove 215 only needs to be formed to extend in a concave shape toward the outer side in the radial direction of the core metal 201 at the central portion of the inner peripheral edge portion 211 in the circumferential direction of the core metal 201. Therefore, in the ride-on groove 215, the circumferential side 215c may be formed in an arc shape like a wet friction plate 1100 shown in Fig. 15. Further, in the ride-on groove 215, by omitting the circumferential side 215c, for example, like the wet friction plate 1200 shown in Fig. 16, the depth side 215a and the depth side 215b may be formed to approach each other as they go outwardly in the radial direction of the core metal 201, to have a triangular shape in plan view.

As described above, by forming the ride-on side 215 in various shapes, it is possible to define ride-on easiness of the lubricating oil that rides on the friction materials 210 to 1210 from the ride-on side 215. That is, in the ride-on groove 215, it is possible to make it difficult for the lubricating oil to ride on the friction materials 210 to 1210 by the circumferential side 215 formed in a straight line extending in the circumferential direction of the core metal 201, as compared to when the circumferential side 215 has an arc shape, or when the circumferential side 215 is omitted. Thus, the lubricating oil that has ridden on the friction materials 210 to 1210 from the ride-on sides 214a and 214b can easily flow in the circumferential direction of the core metal 201.

In the ride-on groove 215, when the circumferential side 215c has an arc shape, or when the circumferential side 215c is omitted, it is possible to make it easy for the lubricating oil to ride on the friction materials 210 to 1010, as compared to when the circumferential side 215c is formed in the straight line extending in the circumferential direction of the core metal 201. Thus, it is possible to supplement the amount of lubricating oil that has ridden on the friction materials 210 to 1010 from the ride-on sides 214a and 214b. The shape of the ride-on grooves 215 is appropriately determined according to a size or shape of the friction materials 210 to 1210 or specifications of the multi-plate clutch device 100.

In the above embodiment, an example in which the wet friction plate according to the present invention is applied to the wet friction plate 200 used in the multi-plate clutch device 100 has been described. However, the wet friction plate according to the present invention only needs to be a wet friction plate used in oil. The wet friction plate according to the present invention can be applied not only to the multi-plate clutch device 100 but also to a friction plate used in a brake device that brakes rotational motion by the prime mover.

### LIST OF REFERENCE NUMERALS

O: rotational center of core metal, L: imaginary oil groove center line, 90: wet friction plate, 91: core metal, 92: friction material, 93: small oil groove, 94: friction material group, 95: fan-shaped groove, 96: inner peripheral edge portion, 97: outer peripheral edge portion, 98: circumferential end portion, 100: multi-plate clutch device, 101: housing, 102: input gear, 102a: torque damper, 102b: rivet, 103: clutch plate, 104: friction plate holder, 104a: cylindrical support column, 105: shaft, 105a: needle bearing, 105b: nut, 106: push rod, 107: pressing cover, 107a: release bearing, 108a: bolt, 108b: receiving plate, 108c: coil spring, 200: wet friction plate, 201: core metal, 202: spline, 203: oil groove, 203a: inner fan-shaped portion, 203b: orifice portion, 203c: outer fan-shaped portion, 210: friction material, 211: inner peripheral edge portion, 212: outer peripheral edge portion, 213a, 213b: circumferential end portion, 214a, 214b: ride-on side, 215: ride-on groove, 215a, 215b: depth side, 215c: circumferential side, 216: notch groove, 216a, 216b: depth side, 216c: circumferential side, 217a, 217b: outer corner portion, 218a, 218b: get-offside, 300, 400, 500, 600, 700, 800, 900, 1000, 1100, 1200: wet friction plate, 310, 410, 510, 610, 710, 810, 910, 1010, 1110, 1210: friction material.

## Claims

1. A wet friction plate comprising
an oil groove formed in a gap between friction materials by a plurality of the friction materials arranged through the gap in a circumferential direction on a surface of a core metal formed in a flat plate annular shape, wherein
the friction material includes ride-on sides and a ride-on groove,
the ride-on sides respectively extend linearly between both end portions of an inner peripheral edge portion extending in the circumferential direction of the core metal on an inner side in a radial direction of the core metal and both end portions of an outer peripheral edge portion extending in the circumferential direction of the core metal on an outer side in the radial direction of the core metal,
the ride-on groove extends in a concave shape toward the outer side in the radial direction of the core metal at a central portion of the inner peripheral edge portion in the circumferential direction of the core metal, and
when an imaginary oil groove center line connecting a center of the core metal and a center of width of the oil groove adjacent to the ride-on sides is assumed, the ride-on sides are formed to extend in a direction away from the imaginary oil groove center line from the both end portions of the outer peripheral edge portion toward the both end portions of the inner peripheral edge portion.

2. The wet friction plate according to claim 1, wherein the ride-on sides are longer than a length from each of the ride-on sides to the ride-on groove of the inner peripheral edge portion adjacent to the ride-on sides.

3. The wet friction plate according to claim 1 or 2, wherein the ride-on sides are formed to have an angle of 10° or more and 45° or less with respect to the imaginary oil groove center line.

4. The wet friction plate according to any one of claims 1 to 3, wherein the outer peripheral edge portion has a protruding outer corner portion formed at each of the both end portions thereof.

5. The wet friction plate according to any one of claims 1 to 4, wherein the friction material further comprises a notch groove extending in a concave shape toward an inner side in a radial direction of the core metal at the central portion of the outer peripheral edge portion in the circumferential direction of the core metal.
